# EUROPEAN PATENT SPECIFICATION

(11) **EP 3 605 572 B1**
(45) Date of publication and mention of the grant of the patent: **07.06.2023**
(21) Application number: 18186248.3
(22) Date of filing: 30.07.2018
(51) Int. Cl.: H01G 7/06, H01G 4/12

(54) **CONTROLLABLE CAPACITOR AND METHOD FOR CONTROLLING AND MAKING SUCH CAPACITOR**
STEUERBARER KONDENSATOR UND VERFAHREN ZUR STEUERUNG UND HERSTELLUNG SOLCH EINES KONDENSATORS
CONDENSATEUR POUVANT ÊTRE COMMANDÉ ET PROCÉDÉ DE COMMANDE ET DE FABRICATION D'UN TEL CONDENSATEUR

(43) Date of publication of application: 05.02.2020
(73) Proprietor: Digital Concepts Company Limited, Wan Chai (HK)
(72) Inventor: ESENIN, Sergey, 119071 Moscow (RU); DAUER, Olaf, 26441 Jever (DE); SAMOILOV, Valentin, 141900 Dubna, Moscow region (RU); VASILIV, Sergei, 129281 Moscow (RU)
(74) Representative: Plasseraud IP

(56) References cited:
- EP-A1- 2 474 505
- RU-C2- 2 266 585
- US-A1- 2004 201 137

## Description

The present invention relates to the field of energy storage technologies and devices, especially capacitors.

Due to the constant depletion of fossil fuels, the sustainable and renewable energy resources have taken prime importance. There is a great interest in developing and refining more efficient energy storage devices. The capacitors have attracted much attention in the automotive and consumer electronics industry due to their high capacitance, pulse power capacities, and long lifecycle. The capacitance of the capacitor is several orders of magnitude higher than the dielectric capacitors, and the power density is much higher than most batteries. Further, the capacitors bridge the gap between batteries and dielectric capacitors.

The electric vehicle, wind power, solar power system, etc. uses energy storage systems. Especially, energy storage system plays a very important role in net integration of renewable energy resources. Some of the promising energy storage systems for such applications are batteries and capacitors. The capacitors have been gaining much recognition in such areas of applications due to their advantageous over batteries especially because of the high charge-discharge rate, long cycle life, outstanding power density and no short-circuit issues that are the common concerns with the current battery or fuel-cell technology. The capacitors offer increased energy storage with little compromise of power density that is a critical need for practical applications such as in plug-in hybrid electric vehicles, wind turbine or solar plant energy storage, regenerative braking technology and so on.

As an example, windmills generally face the problem of wind fluctuations and the generated power may have an unacceptable fluctuation. The high fluctuation in the output power connected to the power grid may negatively influence the stability of the net. Capacitors can alleviate the potential problems. The capacitors charge faster than the batteries and are highly reliable for short mismatch between the power demand and power availability. The capacitor has a further advantage since it requires fewer components than batteries and is of lower maintenance. The capacitors offer wider operating temperature range by reliably withstanding harsh environmental conditions. Meanwhile, continuous cycling and harsh environmental conditions take a heavy toll on the batteries. Hence, capacitors are preferred candidates to store energy harvested from wind or from combustion of waste.

RU 2266585 C2 relates to an electric condenser to increase the specific capacitance of the capacitor. This document discloses that the capacitor incorporates insulating material inserted between current conducting plates and uses a carrier. Further, an active medium in form of ferroelectric nanoparticles is inserted in between the electrodes. This document also relates to the preparation of ferroelectric particles in order to obtain higher dielectric permittivity.

Even though this document discloses the ferroelectric particle in the active medium inserted between the electrodes, it fails to teach an additional electrode to tune dielectric permittivity of the capacitor and control the polarization and dielectric permittivity of a dielectric layer. Further, this document fails to recognize that the dielectric constant of the capacitor could be increased by constantly exciting the particles by an excitation frequency of the dielectric layer by an additional electrode. RU 2266585 C2 completely fails to recognize the improvement in dipole moment when the particles of the active layer are resonantly excited. In addition, this document is silent and fails to recognize a component protection module (CPM) and its advantages. Further, this document is also silent about an analyzer that is in communication with the component protection module.

The main drawbacks of the present knowledge limits the capacitance of the capacitors to the properties of the material, especially the dielectric material used. Further, there does not exist any knowledge of exciting the dielectric layer by applying a modulation signal to tap the hidden material properties the dielectric layer.

The further drawbacks are that the present capacitors are limited by the dielectric permittivity. The total maximum charge and instant uncontrolled discharge create significant leakage current.

The object of the present invention to provide a novel a device comprising a capacitor that overcome above-described drawbacks.

A further object is to provide a method for controlling the device comprising the capacitor and a method for making the primary electrodes for a controllable capacitor.

It is another object of the present invention to be able to access the increased dielectric permittivity of the material of the capacitor to achieve an overall higher capacitance.

The objects are solved by the features of the independent claims. Further, the dependent claims disclose the features of additional developments.

According to the first aspect of the invention, a device comprising a capacitor according to the present invention comprises at least two primary electrodes, at least a dielectric layer of dielectric material, at least one additional electrode for controlling polarization and dielectric permittivity of the dielectric material by exciting with at least an excitation frequency of the dielectric material, and a component protection module (CPM) comprising an output modulator, which supplies an output modulation signal to the additional electrode based on discharging current information and based on the exciting frequency of the dielectric material.

The material of the dielectric layer is advantageously resonated at the resonance frequency through the output modulation signal supplied by the additional electrode. This results in the faster change of the dipole moment of the dielectric layer, whereby offering high dielectric permittivity and higher energy density by regulating the dielectric layer by a modulation signal.

The device comprising the capacitor according to the present invention further preferably comprises an analyzer in communication with the component protection module to control the output modulation signal through the discharging current information.

Advantageously, the dielectric permittivity of the dielectric layer can be increased in accordance with the output modulation signal. The analyzer acts as an energy demand analyzer for a user by communicating with the component protection module.

According to the first preferred implementation form of the first aspect, the primary electrodes of the capacitor are formed by electroconductive nanostructured plates, and/or at least one dielectric layer is formed by a ferroelectric material. The at least one dielectric layer is placed between the primary electrodes.

It is highly advantageous and preferred to form the primary electrodes as nanostructured plates in order to increase the effective surface area or the active contact area at a nanoscale level.

According to a further preferred implementation form of the first aspect, the dielectric layer of the capacitor are configured to have two sublayers of either equal or unequal thickness by an appropriately positioning of the additional electrode in the dielectric layer.

The additional electrode is advantageously and preferably placed in a manner to achieve asymmetric sublayers. This results in a non-uniform response for the supplied modulation signal by the additional electrode in the sublayers, which in turn influences the dipole moment of the material. The dipole moment of the smaller sublayer varies from the lager sublayer, whereby achieving a higher capacitance for the device comprising the capacitor. Therefore, the additional electrode is positioned appropriately to achieve asymmetric sublayers. This can further increased capacitance of the device comprising the capacitor.

According to a further preferred implementation form of the first aspect, the output modulator of the device comprising the capacitor comprises a bias generator to generated the excitation frequency of modes of a nanoparticles or of a material of a main carrier of the dielectric layer. The output modulator is configured in a manner that excitation frequencies apply to the additional electrode to resonantly excite the nanoparticles or the main carrier of the dielectric layer.

Advantageously, the dielectric layer can preferably be formed as the sequence of nanoparticles or the main carrier material, which has the form of ellipsoids of revolution with the ratio of the lengths of the semi-axis as 0.31 and oriented towards the primary electrodes. A volume concentration of the nanoparticles of 18.5% to 19.5% is highly preferable.

Advantageously, the coupling of nanoparticles or the material of the main carrier to their resonant frequency results in phase transition. Resonantly exciting the nanoparticles or the material of the main carrier of the dielectric layer enables tapping the material properties, which are inaccessible under ambient conditions. Hence, resonating the material of the dielectric layer at the resonance frequency yields improved capacitance.

According to the present invention, it is highly advantageous to resonate nanoparticles or the material of the main carrier at the resonance frequency in order to increase the capacitance of the capacitor.

According to a further preferred implementation form of the first aspect, the dielectric layer of the capacitor comprises at least one of the materials BaTiO₃ or (PbLaBaS) (ZrTi)O₃ or a mixture thereof.

According to a further preferred implementation form of the first aspect, the primary electrodes and/or the additional electrode comprises at least one of materials a metal oxide, such as ruthenium oxide, nickel oxide, magnesium oxide, iridium oxide and/or a carbon-based material, such as activated carbon, carbon nanotubes, graphene, and/or a conducting polymer, such as polyaniline, or a combination thereof.

A further preferred embodiment of the electrode materials is nanocomposites such as carbon-carbon composite and/or carbon-metal oxide composite and/or carbon-conducting polymer composite or a combination thereof.

It is highly advantageous to form the primary electrodes as nanostructured plates in order to increase the effective surface or the active contact area at a nanoscale level.

According to a further preferred implementation form of the first aspect, the output modulator of the capacitor is configured in a manner that on initializing the controllable capacitor, the dielectric permittivity is tuned by the excitation frequency and is then held constant.

According to a further preferred implementation form of the first aspect, a protocol of a security unit (SU) of the component protection module identifies a user at initialization, confirms the user during operation and terminates power supply when an error in confirmation of the user occurs. Therefore, the component protection module protects the controllable capacitor against unauthorized access.

As a further preferred embodiment of the present invention, the output modulator of the component protection module, which is advantageously controlled by the analyzer, eliminates current leakage of the controllable capacitor.

According to a second aspect of the invention, a method for controlling a device comprising a capacitor comprises the following steps: controlling polarization and/or dielectric permittivity of the dielectric material by the at least one additional electrode using excitation frequency of the dielectric material and supplying the output modulator signaled by the component protection module based on the discharging current information.

According to the first preferred implementation form of the second aspect, the method further comprises the step of communicating by the analyzer for the component protection module to control the output modulation signal through the discharging current information.

According to a further preferred implementation form of the second aspect, the method further comprises the step of generating by a bias generator of the component protection module the excitation frequency of modes of the nanoparticles or of the material of the main carrier and applying an output modulator signal to the additional electrode. This will excite the nanoparticles or the main carrier of the dielectric layer.

According to a further preferred implementation form of the second aspect, the method further comprises the step of communicating between the analyzer on the component protection model by a digital signal, especially by a pulse with modulating signal wherein the pulse width is directly or indirectly proportional to the current discharging the capacitor.

According to a further preferred implementation form of the second aspect, the method further comprises the step of initializing the controllable capacitor by tuning the dielectric permittivity by excitation frequency and fixing it constant.

According to a further preferred implementation form of the second aspect, identifying a user by a security unit protocol at initialization, confirming the user during operation and terminating the power supply, when an error in confirmation of the user occurs is done.

According to a third aspect of the invention, a method for making the primary electrode of the controllable capacitor is provided. According to the present invention, the primary electrodes are formed by either a vacuum deposition or a plasma galvanic etching. The vacuum deposition or the plasma galvanic etching forms nanocavities within a nanostructured matrix.

As a first preferred implementation, the nanostructured matrix can be an aerogel.

According to a second preferred implementation form of the third aspect, the nanocavities are filled with fullerenes or fullerene derivatives to increase surface area. The etching and filling the nanocavities with fullerenes are performed in a magnetic field.

Advantageously, the surface area of the electrodes is increased at the nanoscale level. The capacity of the capacitor charge storage is dependent on the size of the electrode surface area and the material of the electrode. The present invention advantageously addresses this by the inventive preparation method for the electrodes.

The spherical fullerene molecules are particularly attractive for definite structures, higher electron affinity and the three-dimensional electron transport properties. Hence, fullerene or fullerene derivative can be used for filling the cavity with an intention to increase the surface area.

According to a further preferred implementation form of the third aspect, the method further comprises additional steps of forming the primary electrode as electric nanostructured plates, forming the dielectric layer by ferroelectric material, and placing the dielectric layer in between the primary electrodes.

According to a further preferred implementation form of the third aspect, configuring the dielectric layer to have sublayers with either equal or unequal thickness by positioning the additional electrode in the layer accordingly.

It is highly advantageous to achieve higher capacitance by providing unequal sublayers using the additional electrode position.

An exemplary embodiment of dimensions are now further explained with regard to the drawings by way of example only and not for limitation.

In the following explanatory embodiments of the invention are described with reference to the drawings. Those exemplary embodiments do not limit the scope of the invention. The same reference signs in different drawings indicate the same elements or at least the same functions unless otherwise stated. In the drawings:
- Fig. 1: shows an embodiment of the device comprising the capacitor according to the present invention;
- Fig. 2: shows an embodiment of the component protection module according to the present invention;
- Fig. 3: shows an embodiment of the unequal sublayers formed by appropriately positioning the additional electrode according to the present invention;
- Fig.4: shows a flowchart of the steps of the working of the device comprising the capacitor according to the present invention and
- Fig. 5: shows a flowchart of the steps involved in the preparation of the primary electrodes according to the present invention.

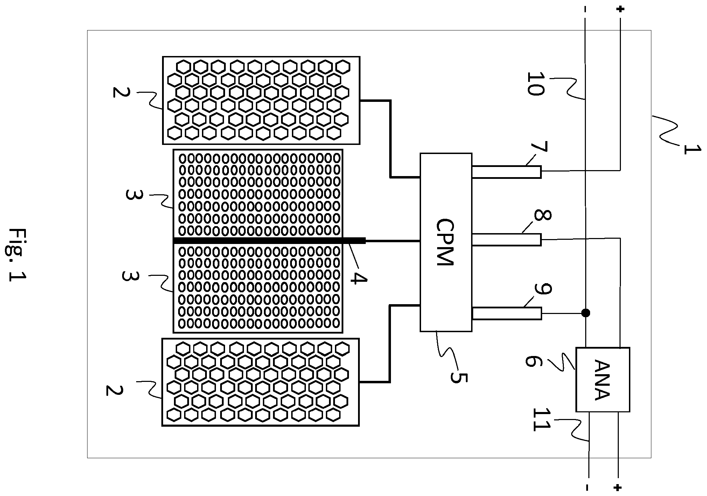

In Fig. 1, an embodiment of a device comprising a capacitor is shown. The device comprising the capacitor 1 comprises at least two primary electrodes 2, at least a dielectric layer 3, and at least one additional electrode 4. The dielectric layer 3 is placed between the two primary electrodes 2.

The additional electrode 4 is for controlling polarization and dielectric permittivity of dielectric layer 3 by exciting with at least an excitation frequency of the dielectric material. The additional electrode 4 is positioned in the dielectric layer 3 in a manner to divide the dielectric layer either symmetrically or asymmetrically.

By applying a resonance frequency to the dielectric layer 3 it is possible to tune the properties of the dielectric layer 3. Thereby positively influence the dielectric permittivity of the dielectric layer 3. Hence, the dielectric permittivity of the capacitor 1 is increased.

The device comprising the capacitor 1 according to the present invention further comprises a component protection module 5 and an analyzer 6. An analyzer 6 acts as an energy demand analyzer for an external device of the device 1. The component protection module 5 is in communication with the analyzer 6 in order to control the output modulation signal through the discharging current information on the basis of the demand of current flowing through the external device.

The device comprising the capacitor 1 further comprises an charging terminals 10 and an discharging terminal 11. The component protection module 5 is connected to the charging terminal 10 via charging electrode 7. The discharging terminals 11 are connected to the analyzer 6, which is in turn connected to the component protection module 5 via the discharging electrodes 8 and 9.

The primary electrodes 2 of the device comprising the capacitor 1 are preferably formed by electroconductive nanostructured plates. The at least one dielectric layer 3 is preferably formed by a ferroelectric material.

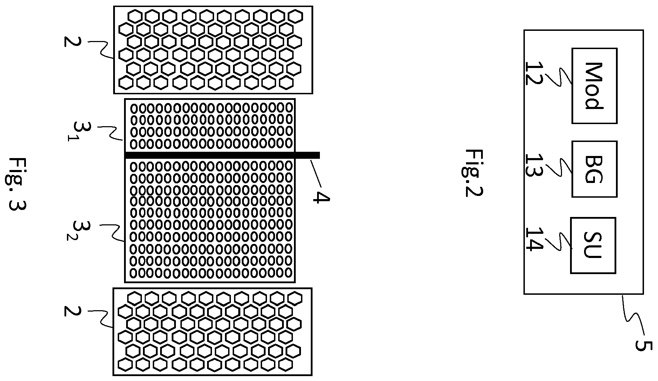

The Fig.2 shows a further implementation of the component protection module 5 according to the present invention. The component protection module 5 comprises an output modulator 12, a bias generator 13, and a security unit 14.

The component protection module 5 comprising an output modulator 12, which supplies an output modulation signal to the additional electrode 4 based on the discharging current information and based on the excitation frequency of the dielectric layer 3.

The component protection module 5 has access to the discharging current information via the discharging electrodes 8 and 9. The component protection module 5 comprises of bias generator 13, which generate the excitation frequency of the modes of the nanoparticles or of the material of the main carrier. The main carrier preferably is the matrix carrying the nanoparticles. This can, for example be a resin. Therefore, with the charging/discharging current information and knowledge of material of the dielectric layer, the output modulator 12 can supply an output modulation signal to the additional electrode 4.

The output modulator 12 is preferably configured in a manner that on initializing the controllable capacitor, the dielectric permittivity is tuned by the excitation frequency and is held constant.

A protocol of a security unit 14 of the component protection module 5 identifies the user at initialization, confirms the user during operation, and terminates power supply when an error in confirmation of the user occurs. This feature of the device comprising the capacitor 1 advantageously avoids unauthorized access to the device.

In Fig. 3, a further implementation of the dielectric layer 3 according to another aspect of the invention is shown. Fig.3 shows the dielectric layer 3 divided into unequal sublayers 3₁ and 3₂ by placing the additional electrode 4 asymmetric.

The additional electrode 4 can be positioned in the dielectric layer 3 in a manner to achieve either equal 3 or unequal 3₁ and 3₂ sublayers. The polarization and dielectric permittivity of the dielectric layer 3 can be controlled through the additional electrode 4. When the additional electrode 4 is placed in a manner to achieve asymmetric sublayer, it results in a non-uniform response of the dielectric layer for the supply of output modulation signal. The asymmetric sublayer 3₁ and 3₂ of the dielectric layer 3 results in higher capacitance for the device 1 comprising capacitor. Therefore, by appropriately positioning the additional electrode 4 a further increase in capacitance of the capacitor 1 is achievable.

It is further conceivable to form capacitor stack by stacking several capacitors together in order to address higher energy storage requirements.

A preferred embodiment of the capacitor stack is by introducing serval dielectric layers 3.

A capacitor stack is conceivable by introducing several additional electrodes 4.

A further preferred embodiment of the capacitor stack is by using several additional electrodes 4 to achieving symmetric or asymmetric or a combination of both to form patterns.

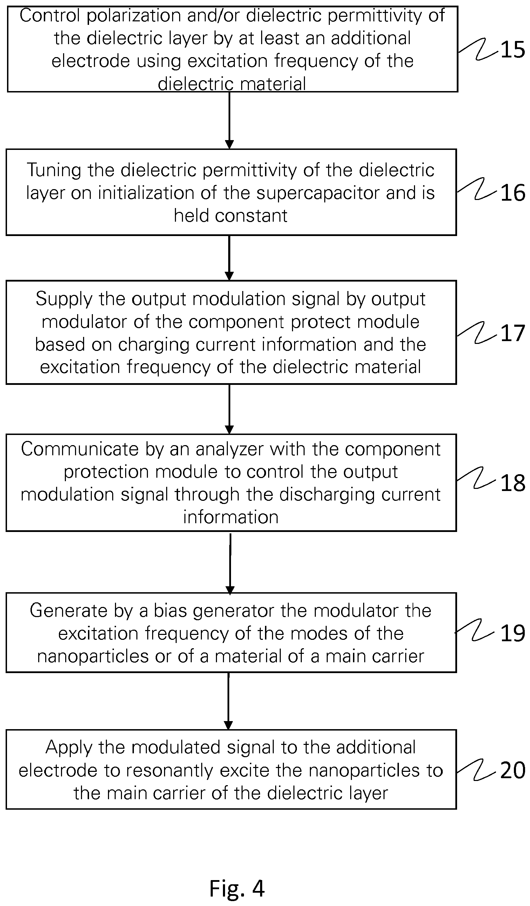

Fig. 4 shows the flowchart of the preferred working of the device comprising the capacitor according to the present invention. The polarization and/or dielectric permittivity of the dielectric layer 3 can be controlled by at least one additional electrode 4 using the excitation frequency of the dielectric material.

On initialization of the device 1 comprising capacitor, the dielectric permittivity of the dielectric material can be tuned and held constant. The output modulator 12 of the component protection module 5 supplies the output modulation signal to the additional electrode 4 based on the charging current information and based on the excitation frequency of the dielectric material.

The analyzer 6 communicates with the component protection module 5 in order to control the output modulation signal through the discharging current information.

The bias generator 13 of the component protection module 5 generates the excitation frequency of the modes of the nanoparticles or of a material of the main carrier.

The modulated signal is applied to the additional electrode 4 to resonantly excite the nanoparticles to the main carrier of the dielectric layer.

The excitation frequency preferably is in the range of ultrasonic frequencies or radio frequencies. It is preferably in the range between 100 MHz and 16 GHz, most preferably in the range between 400 MHz and 500 MHz.

Hence, an excited dielectric layer offer the capacitor to achieve a higher capacitance.

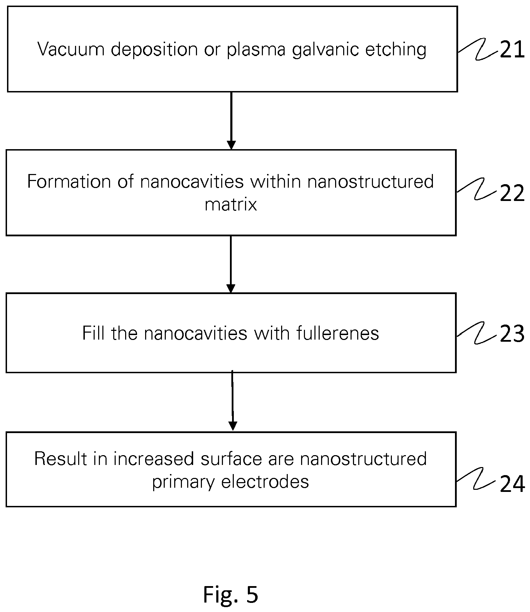

In Fig. 5, the steps involved in the creating of the primary electrodes are depicted as a flowchart.

The primary electrodes 2 are formed as nanostructured plates by either a vacuum deposition or a plasma galvanic etching.

The surface area of the primary electrodes 2 increases at a nanoscale level by the formation of nanocavities within a nanostructured matrix. The nanostructured matrix can be formed by a aerogel. The nanocavities are filled by fullerenes or its derivatives.

It is further conceivable that a capacitor stack involving several capacitors can be formed to meet the energy storage requirements. In such cases, the component protection module simultaneously synchronizes the operation of several capacitors by controlling, accelerate charging and discharging.

As a further preferred embodiment of the present invention, the capacitor stack can be constructed by stacking several controllable capacitors into a single component to have higher working voltage. The stacking of capacitors can be advantageously realized by using several additional electrodes and/or more than one dielectric layer.

As a further preferred embodiment of the present invention, several additional electrodes can form symmetric or asymmetric or a combination pattern thereof to configure the capacitor stack.

As a further preferred embodiment of the present invention, the controllable capacitor operating DC circuit offers a constant voltage supply at the output.

All features of all embodiments described, shown and/or claimed herein can be combined with each other.

While various embodiments of the present invention have been described above, it should be understood that they have been presented as a way of example only, and not limitation. Numerous changes to the disclosed embodiment can be made in accordance with the disclosure herein without departing from the spirit or the scope of the invention. Thus, the breadth and scope of the present invention should not be limited to any of the bow described embodiments. Rather, the scope of the invention should be defined in accordance with the following claims and their equivalents.

Although the invention has been illustrated and described with respect to one or more implementations, equivalent alterations and modifications will occur to others skilled in the art upon the reading and understanding of this specification and annexed drawings. In addition, while a particular feature of the invention may have been disclosed with respect only one of the several implementations, such feature may be combined with one or more other features of other implementations as may be described in advantageous for any given or particular application.

## Claims

1. A device (1) comprising a capacitor comprising
at least two primary electrodes (2),
at least one dielectric layer of a dielectric material (3),
at least one additional electrode (4) for controlling polarization and dielectric permittivity of the dielectric material by exciting with at least an excitation frequency of the dielectric material, and a component protection module (5) comprising an output modulator (12) which supplies an output modulation signal to the additional electrode (4) based on discharging current information and based on the exciting frequency.

2. The device (1) according to claim 1, comprising an analyzer (6) in communication with the component protection module (5) to control the output modulation signal through the discharging current information.

3. The device (1) according to claim 1 or 2,
wherein the primary electrodes (2) are formed by electroconductive nanostructured plates, and/or wherein the at least one dielectric layer is formed by a ferroelectric material, and/or
wherein the at least one dielectric layer (3) is placed between the primary electrodes.

4. The device (1) according to any of claims 1 to 3,
wherein the dielectric layer (3) is configured to have two sublayers of either equal or unequal thickness by an appropriately positioning of the additional electrode (4) in the dielectric layer (3).

5. The device (1) according to any of claim 1 to 4,
wherein the output modulator (12) comprises a bias generator (13) which generates the excitation frequency of modes of nanoparticles or of a material of a main carrier of the dielectric layer (3) and wherein the output modulator (12) is configured in a manner that the excitation frequency is applied to the additional electrode (4) to resonantly excite the nanoparticles or the main carrier of the dielectric layer (3).

6. The device (1) according to any of claims 1 to 5,
wherein the dielectric layer (3) comprises at least one of materials BaTiO₃ and/or (PbLaBaS) (ZrTi)O₃ and/or wherein the primary electrodes (2) and/or the additional electrode (4) comprises at least one of metal oxides and/or carbon-based materials and/or conducting polymers and/or carbon-based nanocomposites or a combination thereof.

7. The device according to claim 6, wherein the metal oxides are chosen between ruthenium oxide, nickel oxide, magnesium oxide, iridium oxide and/or the carbon-based materials are chosen between activated carbon, carbon nanotubes, graphene, and/or the conducting polymer is polyaniline

8. The device according to any of claims 1 to 7, wherein the dielectric layer (3) is formed as the sequence of nanoparticles or the main carrier material, which has the form of ellipsoids of revolution with a ratio of the lengths of the semi-axis as 0.31 and oriented towards the primary electrodes.

9. The device according to claim 8, wherein a volume concentration of the nanoparticles is comprised between 18.5% to 19.5%.

10. The device (1) according to claims 1 to 9,
wherein the output modulator (12) is configured in a manner that on initializing the controllable capacitor (1), the dielectric permittivity is tuned by the excitation frequency and is then held constant, and/or
wherein a protocol of a security unit (14) of the component protection module (5) identifies a user at initialization, confirms the user during operation and terminates power supply when an error in confirmation of the user occurs.

11. The device according to any of the preceding claims, wherein the excitation frequency preferably is in the range of ultrasonic frequencies or radio frequencies.

12. The device according to claim 8, wherein the excitation frequency is in the range between 100 MHz and 16 GHz.

13. The device according to claim 9, wherein the excitation frequency is in the range between 400 MHz and 500 MHz.

14. A method for controlling a device (1) of claim 1 comprising the steps of:
controlling polarization and/or dielectric permittivity of the dielectric material by the at least one additional electrode (4) using the excitation frequency of the dielectric material, and
supplying the output modulation signal of the output modulator (12) of the component protection module (5) based on the discharging current information.

15. The method according to claim 14,
having the additional step of:
communicating by an analyzer (6) with the component protection module (5) to control the output modulation signal through the discharging current information.

16. The method according to any of claims 14 or 15, having the additional steps of:
generating by a bias generator (13) of the component protection module (5) the excitation frequency of modes of nanoparticles or of a material of a main carrier of the dielectric layer (3) and
applying the output modulation signal to the additional electrode (4) to resonantly excite the nanoparticles or the main carrier of the dielectric layer (3).

17. The method according to claim 15,
having the additional step of:
communicating between the analyzer (6) and the component protection module (5) by a digital signal, especially by a pulse width modulated signal,
wherein the pulse width is directly or indirectly proportional to the current discharging the capacitor (1).

18. The method according to any of claims 14 to 17, having the additional steps of:
initializing the controllable capacitor (1) by turning the dielectric permittivity by the excitation frequency and fixing it constant, and/or
identifying a user by a security unit (14) protocol at initialization, confirming the user during operation, and
terminating power supply when an error in confirmation of the user occurs.

19. A method for making a primary electrode (2) of the device (1) according to claim 1, wherein an increased surface area of the primary electrodes is formed by either a vacuum deposition or a plasma galvanic etching, and wherein the vacuum deposition or the plasma galvanic etching forms nanocavities with a nanostructured matrix.

20. The method of claim 19, wherein the nanostructured matrix is formed by an aerogel.

21. The method of any of claims 19 or 20,
wherein the nanocavities are filled with fullerenes to increase surface area, and
wherein the etching and the filing the nanocavities with the fullerenes are performed in a magnetic field.

22. The method of claim 21, wherein the fullerenes are spherical fullerenes.

23. The method of any of claims 19 to 22,
having the additional steps of:
forming the primary electrodes (2) as electroconductive nanostructured plates,
forming the dielectric layer (3) by a ferroelectric material,
placing the dielectric layer (3) in between the primary electrodes (3) and
configuring the dielectric layer (3) to have sublayers with either equal or unequal thickness by positioning the additional electrode (4) in the dielectric layer (3) accordingly.

24. The method according to any of claims 14 to 23, wherein the excitation frequency preferably is in the range of ultrasonic frequencies or radio frequencies.

## Patentansprüche

1. Vorrichtung (1), umfassend einen Kondensator, umfassend
wenigstens zwei primäre Elektroden (2),
wenigstens eine dielektrische Schicht aus einem dielektrischen Material (3), wenigstens eine zusätzliche Elektrode (4) zum Steuern einer Polarisation und einer dielektrischen Permittivität des dielektrischen Materials durch Anregen mit wenigstens einer Anregungsfrequenz des dielektrischen Materials, und ein Komponentenschutzmodul (5), welches einen Ausgangsmodulator (12) umfasst, welcher der zusätzlichen Elektrode (4) auf Grundlage von Entladestrominformationen und auf Grundlage der Anregungsfrequenz ein Ausgangsmodulationssignal zuführt.

2. Vorrichtung (1) nach Anspruch 1, umfassend eine Analyseeinrichtung (6) in Kommunikation mit dem Komponentenschutzmodul (5), um das Ausgangsmodulationssignal durch die Entladestrominformationen zu steuern.

3. Vorrichtung (1) nach Anspruch 1 oder 2,
wobei die primären Elektroden (2) durch elektrisch leitfähige nanostrukturierte Platten gebildet sind, und/oder wobei die wenigstens eine dielektrische Schicht durch ein ferroelektrisches Material gebildet ist, und/oder
wobei die wenigstens eine dielektrische Schicht (3) zwischen den primären Elektroden platziert ist.

4. Vorrichtung (1) nach einem der Ansprüche 1 bis 3,
wobei die dielektrische Schicht (3) dazu eingerichtet ist, durch ein entsprechendes Positionieren der zusätzlichen Elektrode (4) in der dielektrischen Schicht (3), zwei Subschichten von entweder gleicher oder ungleicher Dicke aufzuweisen.

5. Vorrichtung (1) nach einem der Ansprüche 1 bis 4,
wobei der Ausgangsmodulator (12) einen Vorspannungsgenerator (13) umfasst, welcher die Anregungsfrequenz von Modi von Nanopartikeln oder eines Materials eines Hauptträgers der dielektrischen Schicht (3) erzeugt, und wobei der Ausgangsmodulator (12) in einer Weise eingerichtet ist, dass die Anregungsfrequenz an der zusätzlichen Elektrode (4) angelegt wird, um die Nanopartikel oder den Hauptträger der dielektrischen Schicht (3) resonant anzuregen.

6. Vorrichtung (1) nach einem der Ansprüche 1 bis 5,
wobei die dielektrische Schicht (3) wenigstens eines aus den Materialien BaTiO₃ und/oder (PbLaBaS) (ZrTi)O₃ umfasst und/oder wobei die primären Elektroden (2) und/oder die zusätzliche Elektrode (4) wenigstens eines aus Metalloxiden und/oder Materialien auf Kohlenstoffbasis und/oder leitfähigen Polymeren und/oder Nanoverbundwerkstoffen auf Kohlenstoffbasis oder eine Kombination davon umfasst/umfassen.

7. Vorrichtung nach Anspruch 6, wobei die Metalloxide zwischen Rutheniumoxid, Nickeloxid, Magnesiumoxid, Iridiumoxid ausgewählt sind und/oder Materialien auf Kohlenstoffbasis zwischen aktiviertem Kohlenstoff, Kohlenstoffnanoröhren, Graphen ausgewählt sind und/oder das leitfähige Polymer Polyanilin ist.

8. Vorrichtung nach einem der Ansprüche 1 bis 7, wobei die dielektrische Schicht (3) als die Sequenz von Nanopartikeln oder des Hauptträgermaterials gebildet ist, welche die Form von Rotationsellipsoiden mit einem Verhältnis der Längen der Halbachse von 0,31 und in Richtung der primären Elektroden ausgerichtet aufweist.

9. Vorrichtung nach Anspruch 8, wobei eine Volumenkonzentration der Nanopartikel zwischen 18,5 % bis 19,5 % umfasst ist.

10. Vorrichtung nach einem der Ansprüche 1 bis 9,
wobei der Ausgangsmodulator (12) in einer Weise ausgerichtet ist, dass auf ein Initialisieren des steuerbaren Kondensators (1), die dielektrische Permittivität durch die Anregungsfrequenz abgestimmt und dann konstant gehalten wird, und/oder
wobei ein Protokoll einer Sicherheitseinheit (14) des Komponentenschutzmoduls (5) einen Benutzer bei einer Initialisierung identifiziert, den Benutzer während eines Betriebs bestätigt und eine Energiezufuhr beendet, wenn ein Fehler in einer Bestätigung des Benutzers auftritt.

11. Vorrichtung nach einem der vorhergehenden Ansprüche, wobei die Anregungsfrequenz vorzugsweise in dem Bereich von Ultraschallfrequenzen oder Hochfrequenzen liegt.

12. Vorrichtung nach Anspruch 8, wobei die Anregungsfrequenz in dem Bereich von zwischen 100 MHz und 16 GHz liegt.

13. Vorrichtung nach Anspruch 9, wobei die Anregungsfrequenz in dem Bereich von zwischen 400 MHz und 500 MHz liegt.

14. Verfahren zum Steuern einer Vorrichtung (1) nach Anspruch 1, umfassend die folgenden Schritte:
Steuern einer Polarisation und/oder einer dielektrischen Permittivität des dielektrischen Materials durch die wenigstens eine zusätzliche Elektrode (4) unter Verwendung der Anregungsfrequenz des dielektrischen Materials, und
Zuführen des Ausgangsmodulationssignals des Ausgangsmodulators (12) des Komponentenschutzmoduls (5) auf Grundlage der Entladestrominformationen.

15. Verfahren nach Anspruch 14,
welches den folgenden zusätzlichen Schritt aufweist:
Kommunizieren durch eine Analyseeinrichtung (6) mit dem Komponentenschutzmodul (5), um das Ausgangsmodulationssignal durch die Entladestrominformationen zu steuern.

16. Verfahren nach einem der Ansprüche 14 oder 15, welches die folgenden zusätzlichen Schritte aufweist:
Erzeugen, durch einen Vorspannungsgenerator (13) des Komponentenschutzmoduls (5), der Anregungsfrequenz von Modi von Nanopartikeln oder eines Materials eines Hauptträgers der dielektrischen Schicht (3), und
Anlegen des Ausgangsmodulationssignals an der zusätzlichen Elektrode (4), um die Nanopartikel oder den Hauptträger der dielektrischen Schicht (3) resonant anzuregen.

17. Verfahren nach Anspruch 15,
welches den folgenden zusätzlichen Schritt aufweist:
Kommunizieren zwischen der Analyseeinrichtung (6) und dem
Komponentenschutzmodul (5) durch ein digitales Signal, insbesondere durch ein pulsweitenmoduliertes Signal,
wobei die Pulsweite direkt oder indirekt proportional zu dem Strom ist, welcher den Kondensator (1) entlädt.

18. Verfahren nach einem der Ansprüche 14 bis 17, welches die folgenden zusätzlichen Schritte aufweist:
Initialisieren des steuerbaren Kondensators (1) durch Abstimmen der dielektrischen Permittivität durch die Anregungsfrequenz und Konstanthalten derselben, und/oder Identifizieren eines Benutzers durch ein Sicherheitseinheit (14)-Protokoll bei einer Initialisierung, Bestätigen des Benutzers während eines Betriebs, und Beenden einer Energiezufuhr, wenn ein Fehler in einer Bestätigung des Benutzers auftritt.

19. Verfahren zur Herstellung einer Primärelektrode (2) der Vorrichtung (1) nach Anspruch 1, wobei eine vergrößerte Oberfläche der primären Elektroden entweder durch ein Vakuumabscheiden oder ein galvanisches Plasmaätzen gebildet wird, und
wobei das Vakuumabscheiden oder das galvanische Plasmaätzen Nanokavitäten mit einer nanostrukturierten Matrix bildet.

20. Verfahren nach Anspruch 19, wobei die nanostrukturierte Matrix durch ein Aerogel gebildet wird.

21. Verfahren nach einem der Ansprüche 19 oder 20,
wobei die Nanokavitäten mit Fullerenen gefüllt werden, um eine Oberfläche zu vergrößern, und
wobei das Ätzen und das Füllen der Nanokavitäten mit den Fullerenen in einem Magnetfeld durchgeführt werden.

22. Verfahren nach Anspruch 21, wobei die Fullerene sphärische Fullerene sind.

23. Verfahren nach einem der Ansprüche 19 bis 22,
welches die folgenden zusätzlichen Schritte aufweist:
Bilden der primären Elektroden (2) als elektrisch leitfähige nanostrukturierte Platten,
Bilden der dielektrischen Schicht (3) durch ein ferroelektrisches Material,
Platzieren der dielektrischen Schicht (3) zwischen den primären Elektroden (3), und
Konfigurieren der dielektrischen Schicht (3) derart, dass sie Subschichten von entweder gleicher oder ungleicher Dicke aufweist, durch entsprechendes Positionieren der zusätzlichen Elektrode (4) in der dielektrischen Schicht (3).

24. Verfahren nach einem der Ansprüche 14 bis 23, wobei die Anregungsfrequenz vorzugsweise in dem Bereich von Ultraschallfrequenzen oder Hochfrequenzen liegt.

## Revendications

1. Dispositif (1) comprenant un condensateur comprenant
au moins deux électrodes primaires (2),
au moins une couche diélectrique d'un matériau diélectrique (3),
au moins une électrode supplémentaire (4) pour commander la polarisation et la permittivité diélectrique du matériau diélectrique par excitation avec au moins une fréquence d'excitation du matériau diélectrique, et un module de protection de composant (5) comprenant un modulateur de sortie (12) qui apporte un signal de modulation de sortie à l'électrode supplémentaire (4) sur la base d'informations de courant de décharge et sur la base de la fréquence d'excitation.

2. Dispositif (1) selon la revendication 1, comprenant un analyseur (6) en communication avec le module de protection de composant (5) pour commander le signal de modulation de sortie par le biais des informations de courant de décharge.

3. Dispositif (1) selon la revendication 1 ou 2,
dans lequel les électrodes primaires (2) sont formées par des plaques nanostructurées électroconductrices, et/ou dans lequel l' au moins une couche diélectrique est formée par un matériau ferroélectrique, et/ou
dans lequel l'au moins une couche diélectrique (3) est placée entre les électrodes primaires.

4. Dispositif (1) selon l'une quelconque des revendications 1 à 3,
dans lequel la couche diélectrique (3) est configurée pour posséder deux sous-couches d'épaisseur égale ou inégale par un positionnement approprié de l'électrode supplémentaire (4) dans la couche diélectrique (3).

5. Dispositif (1) selon l'une quelconque des revendications 1 à 4,
dans lequel le modulateur de sortie (12) comprend un générateur de polarisation (13) qui génère la fréquence d'excitation de modes de nanoparticules ou d'un matériau d'un support principal de la couche diélectrique (3) et dans lequel le modulateur de sortie (12) est configuré d'une manière telle que la fréquence d'excitation est appliquée à l'électrode supplémentaire (4) pour exciter par résonance les nanoparticules ou le support principal de la couche diélectrique (3).

6. Dispositif (1) selon l'une quelconque des revendications 1 à 5,
dans lequel la couche diélectrique (3) comprend au moins un parmi des matériaux BaTiO₃ et/ou (PbLaBaS) (ZrTi)O₃ et/ou dans lequel les électrodes primaires (2) et/ou l'électrode supplémentaire (4) comprennent au moins un parmi des oxydes métalliques et/ou des matériaux à base de carbone et/ou des polymères conducteurs et/ou des nanocomposites à base de carbone ou une combinaison de ceux-ci.

7. Dispositif selon la revendication 6, dans lequel les oxydes métalliques sont choisis entre l'oxyde de ruthénium, l'oxyde de nickel, l'oxyde de magnésium, l'oxyde d'iridium et/ou les matériaux à base de carbone sont choisis entre le carbone activé, des nanotubes de carbone, le graphène et/ou le polymère conducteur est la polyaniline.

8. Dispositif selon l'une quelconque des revendications 1 à 7, dans lequel la couche diélectrique (3) est formée en tant que séquence de nanoparticules ou matériau de support principal, qui a la forme d'ellipsoïdes de révolution avec un rapport des longueurs du semi-axe à 0,31 et orientées vers les électrodes primaires.

9. Dispositif selon la revendication 8, dans lequel une concentration volumique des nanoparticules est comprise entre 18,5 % et 19,5 %.

10. Dispositif (1) selon les revendications 1 à 9,
dans lequel le modulateur de sortie (12) est configuré d'une manière telle que, lors de l'initialisation du condensateur pouvant être commandé (1), la permittivité diélectrique est accordée par la fréquence d'excitation puis est maintenue constante, et/ou
dans lequel un protocole d'une unité de sécurité (14) du module de protection de composant (5) identifie un utilisateur lors de l'initialisation, confirme l'utilisateur pendant le fonctionnement et met fin à l'alimentation électrique lorsqu'une erreur survient lors de la confirmation de l'utilisateur.

11. Dispositif selon l'une quelconque des revendications précédentes, dans lequel la fréquence d'excitation est de préférence dans la plage de fréquences ultrasonores ou de fréquences radio.

12. Dispositif selon la revendication 8, dans lequel la fréquence d'excitation est dans la plage entre 100 MHz et 16 GHz.

13. Dispositif selon la revendication 9, dans lequel la fréquence d'excitation est dans la plage entre 400 MHz et 500 MHz.

14. Procédé de commande d'un dispositif (1) selon la revendication 1 comprenant les étapes de :
commande de la polarisation et/ou de la permittivité diélectrique du matériau diélectrique par l'au moins une électrode supplémentaire (4) à l'aide de la fréquence d'excitation du matériau diélectrique, et
apport du signal de modulation de sortie du modulateur de sortie (12) du module de protection de composant (5) sur la base des informations de courant de décharge.

15. Procédé selon la revendication 14,
présentant l'étape supplémentaire de :
communication par un analyseur (6) avec le module de protection de composant (5) pour commander le signal de modulation de sortie par le biais des informations de courant de décharge.

16. Procédé selon l'une quelconque des revendications 14 ou 15, présentant les étapes supplémentaires de :
génération par un générateur de polarisation (13) du module de protection de composant (5) de la fréquence d'excitation de modes de nanoparticules ou d'un matériau d'un support principal de la couche diélectrique (3) et
application du signal de modulation de sortie à l'électrode supplémentaire (4) pour exciter par résonance les nanoparticules ou le support principal de la couche diélectrique (3).

17. Procédé selon la revendication 15,
présentant l'étape supplémentaire de :
communication entre l'analyseur (6) et le module de protection de composant (5) par un signal numérique, en particulier par un signal modulé en largeur d'impulsion,
dans lequel la largeur d'impulsion est directement ou indirectement proportionnelle à la décharge de courant du condensateur (1).

18. Procédé selon l'une quelconque des revendications 14 à 17, présentant les étapes supplémentaires de :
initialisation du condensateur pouvant être commandé (1) en accordant la permittivité diélectrique par la fréquence d'excitation et en la fixant à une valeur constante, et/ou identification d'un utilisateur par un protocole d'unité de sécurité (14) lors de l'initialisation, confirmation de l'utilisateur pendant le fonctionnement, et fin de l'alimentation électrique lorsqu'une erreur survient lors de la confirmation de l'utilisateur.

19. Procédé de fabrication d'une électrode primaire (2) du dispositif (1) selon la revendication 1, dans lequel une superficie accrue des électrodes primaires est formée soit par dépôt sous vide soit par gravure galvanique au plasma, et dans lequel le dépôt sous vide ou la gravure galvanique au plasma forme des nanocavités avec une matrice nanostructurée.

20. Procédé selon la revendication 19, dans lequel la matrice nanostructurée est formée par un aérogel.

21. Procédé selon l'une quelconque des revendications 19 ou 20,
dans lequel les nanocavités sont remplies de fullerènes pour augmenter la superficie, et
dans lequel la gravure et le remplissage des nanocavités avec les fullerènes sont réalisés dans un champ magnétique.

22. Procédé selon la revendication 21, dans lequel les fullerènes sont des fullerènes sphériques.

23. Procédé selon l'une quelconque des revendications 19 à 22,
présentant les étapes supplémentaires de :
formation des électrodes primaires (2) en tant que plaques nanostructurées électroconductrices,
formation de la couche diélectrique (3) par un matériau ferroélectrique,
mise en place de la couche diélectrique (3) entre les électrodes primaires (3) et
configuration de la couche diélectrique (3) pour avoir des sous-couches d'épaisseur égale ou inégale en positionnant l'électrode supplémentaire (4) dans la couche diélectrique (3) en conséquence.

24. Procédé selon l'une quelconque des revendications 14 à 23, dans lequel la fréquence d'excitation est de préférence dans la plage de fréquences ultrasonores ou fréquences radio.
